# EUROPEAN PATENT SPECIFICATION

(11) **EP 0 433 277 B1**
(45) Date of publication and mention of the grant of the patent: **22.11.1995**
(21) Application number: 88906317.8
(22) Date of filing: 06.06.1988
(51) Int. Cl.: G02B 6/42

(54) **FIBER OPTIC CONNECTOR AND CONNECTOR ASSEMBLY**
FASEROPTISCHE KOPPLER UND KOPPLUNGSVORRICHTUNG
CONNECTEUR A FIBRE OPTIQUE ET UNITE A CONNECTEUR

(30) Priority: 19.06.1987 GB 8714396
(43) Date of publication of application: 26.06.1991
(73) Proprietor: THE WHITAKER CORPORATION, Wilmington, Delaware 19808 (US)
(72) Inventor: TEN BERGE, Eduardus, Franciscus, Antonius, NL-5151 SL Drunen (NL); VAN ALST, Gerardus, Maria, NL-Oss (NL)
(74) Representative: Warren, Keith Stanley
(86) International application number: US8801889
(87) International publication number: WO8810441

(56) References cited:
- EP-A- 0 096 511
- EP-A- 0 100 086
- DE-A- 3 112 078
- US-A- 4 186 996
- Proceedings of the National Electronics Conference, vol 34, October 1980, R.L. Ohlhaber: "Fiber optics today", pp 45-51
- NEC Fibre Optics Catalogue, 4th Edition (1986), pp 33-36

## Description

This invention relates to a fiber optic connector and to a fiber optic connector assembly, incorporating an active optical device, which may be either a light sensitive device, for example, a light sensitive diode, or a light emitting device, for example, a light emitting diode or a laser.

There is described in EP-A1-96511, a fiber optic connector comprising an optical needle in the form of a length of optical fiber having a rigid concentric coating of constant thickness, and which is formed at each of its opposite end faces with an optical surface; an active optical device; and means for supporting the optical needle and the optical device, for the transmission of light therebetween.

The present invention is intended to provide such a connector, which is compatible with a fiber optic connector assembly which can readily be assembled and disassembled by virtue of the plugability of the parts of the assembly.

According to one aspect thereof the present invention consists in a fiber optic connector as defined in claim 1.

The connector can be supplied to the user, for incorporation in a fiber optic connector assembly having electrical terminals for connection to said external electrodes and means for supporting the cartridge, with the end face of said projecting free end portion in light transmitting, or light receiving, relationship with a further optical fiber, for example with a further optical needle.

Since an optical needle is necessarily rigid and can thus act as a plug, two optical needles can be connected in light transmitting relationship by inserting their end portions through opposite ends of a rigid alignment member which may be in the form of a tubular ferrule. The needle end portions and the ferrule can be dimensioned to very close tolerances, especially where the ferrule is of ceramic material, so that said end portions are slidably and snuggly received in the ferrule, whereby the needle end portions are firmly relatively positioned and whereby the light transmitting connection can readily be made and broken.

Although there is described in US-A-4,186,996, a modular fiber optic connector incorporating an active optical device, the fiber is positioned in relation to the active optical device, by means of a resinous potting material. According to US-A-4,273,413, a fiber optic connector incorporating an active optical device comprises a resilient ferrule containing a photoelectric element. The connector does not, however, comprise an optical needle. Although US-A-3,840,889 and US-A-4,461,538 concern connectors in which an optical fiber is retained in light transmitting relationship with an active optical device, neither of these connectors is in the form of a cartridge and neither comprises an optical needle.

The coating of the optical needle may be provided by electroplating the fiber with metal and then etching the coating so provided to the required thickness, after producing said optical surfaces.

The cartridge may be in the form of a tube comprising a first metal part having a closed end formed with a bore in which the needle is fixed, for example by cold soldering or welding, the first metal part being connected to a second metal part through the medium of an insulator. The first metal part contains the active optical device, with a light transmitting, or a light receiving element, for example a lens, of the active device proximate to the adjacent end face of the optical needle. The active optical device can be press fitted into the first metal part to make electrical contact between a metal can of the active device and the first metal part, another electrode of the active device being electrically connected to the second metal part so that said metal parts constitute the respective external electrodes of the cartridge. The active optical device may be, for example, a light emitting diode, the can of which is the collector electrode of the active optical device, an emitter electrode insulated from the can, being connected to said second metal part. The metal parts of the cartridge may be made, for example, of brass.

According to another aspect thereof the present invention consists in a fiber optic connector assembly as defined in claim 6.

The second optical needle, which may be connected to a light transmitting or a light receiving circuit, may have, spaced back from said alignment member, an enlarged cross-section portion received in a bore in a first support member having latch arms for retaining the alignment member in position.

The connector may be arranged in a second support member having a hood, receiving the latch arms of the first optical connector and thereby retaining them in a latching position, and may be releasably secured in a bore in the second support member, by means of the terminals, which may have contact portions engaging in the depressions in the electrodes of the cartridge with a snap action.

For a better understanding of the invention and to show how it may be carried into effect, reference will now be made by way of example to the accompanying drawings in which:
Figure 1 is a sectional view of a fiber optic connector assembly comprising a fiber optic connector;
Figure 2 is an isometric view of an optical needle;
Figure 3 is a sectional view of the fiber optic connector; and
Figure 4 is an exploded, elevational view of the fiber optic connector.

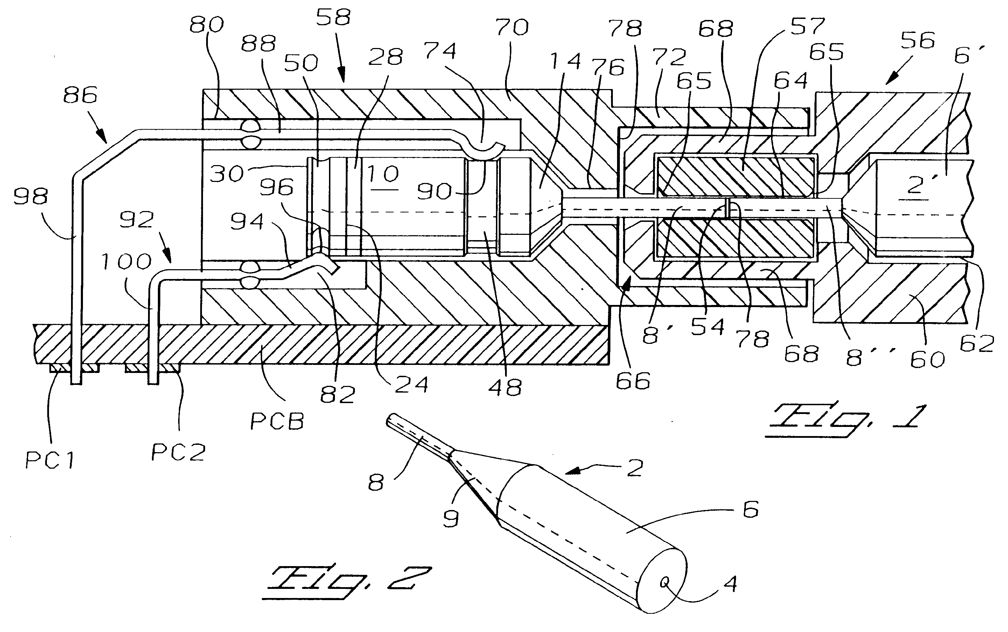

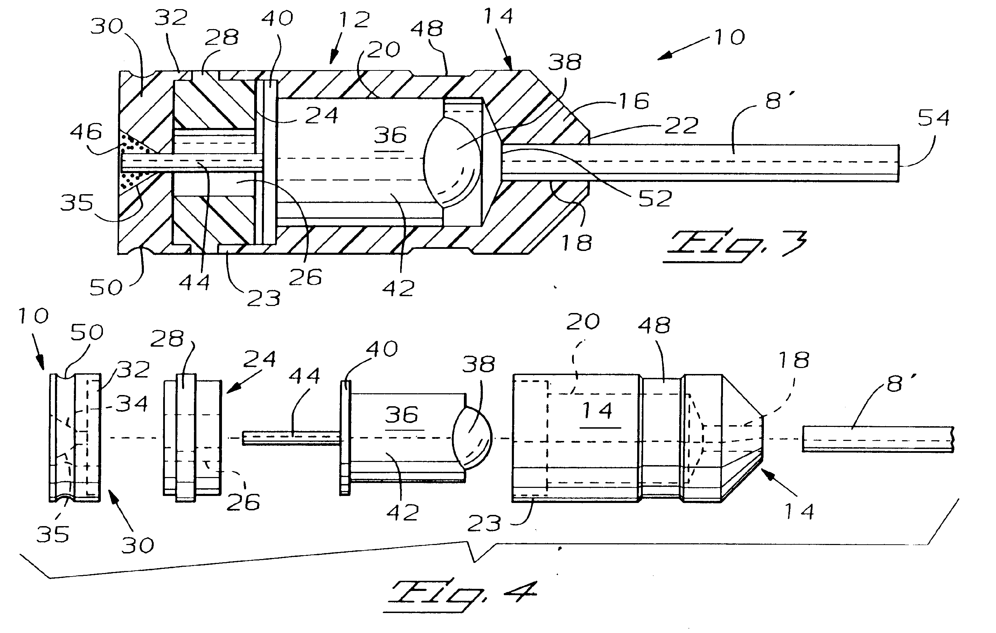

One form of optical needle 2 will now be described with reference to Figure 2. The needle 2 consists of a short length of optical fiber 4 having a rigid concentric metal coating applied to the fiber by electroplating and having been etched away to an extent to produce a needle-like free end portion 8 of metal coated fiber, joined by a tapered transition portion 9 to an enlarged portion 6 over which the metal coating is of its original thickness. Each opposite end face of the fiber was formed with an optical surface prior to the coating having been etched. The coating may be etched to an extent to produce an optical needle of constant cross-sectional area or to produce a transition portion of any required taper.

A fiber optic connector 10, shown in Figures 1, 3 and 4, comprises a circular cross-section cartridge 12 having a tubular first metal part 14 having a closed end 16 formed with a concentric bore 18 communicating with circular cross-section, internal cavity 20 and opening into a forward face 22 of the part 14. The rear end of the part 14, which is open, is formed with a skirt 23 receiving a forward part of an insulator 24 having a central opening 26. Said forward part is bounded by a radial flange 28 abutting the rear end of the skirt 23. A second metal part 30 of the cartridge 12 has a forwardly projecting skirt 32 receiving a rear part of the insulator 24 on the opposite side of the flange 28 to said forward part, with the forward end of the skirt 32 abutting the flange 28. The part 30 has a central, circular cross-section through bore 34 concentric with the opening 26, the bore 34 defining a rearwardly flared, frusto-conical solder cup 35. The parts 14 and 30 have arcuately concave peripheral grooves 48 and 50, respectively. The parts 14 and 30 and the insulator 24 are secured in their assembled position by means of an adhesive.

An active optical device 36, in the form of a light emitting diode in a metal can 42 having a lens 38 at its forward end and a radial flange 40 at its rear end, was press fitted into the cavity 20 of the part 14, prior to the assembly of the metal parts 14 and 30 to the insulator 24. As shown in Figure 3, the flange 40 is lodged in the skirt 23 and is engaged by the insulator 24. The can 42 constitutes the collector electrode of the diode 36, an emitter electrode 44 thereof projecting rearwardly from the can 42 and being insulated therefrom. As shown in Figure 3, the electrode 44 extends through the opening 26 in the insulator 24 and into the cup 35 of the bore 34 and is soldered therein at 46. The parts 14 and 30 of the cartridge 14 may be made, for example, of brass. There is secured in the bore 18 of the metal part 14, a fiber optic needle 8′ of constant cross-sectional area, similar to the portion 8 of the needle 2 shown in Figure 2, and having optical surfaces 42 and 54, respectively, at its ends. The needle 8′ is secured in the bore 18, with its optical face 52 in light receiving relationship with the lens 38, for example, by cold soldering or welding.

The fiber optic connector assembly shown in Figure 1 comprises a first support member 56 supporting a fiber optic needle 2′ and a rigid alignment member in the form of a tubular, circular cross-section ferrule 57, and a second support member 58 supporting the fiber optic connector 10.

The support member 56 has a body 60 formed with a circular cross-section bore 62 receiving a larger cross-section portion 6′ of the needle 2′, a smaller, constant, cross-section portion 8˝ of which is snuggly and slidably received in a central bore 64 of the ferrule 57 which may be made, for example, of glass, ceramic, or metal. The bore 64 has a flared, needle end guiding mouth 65 at each end thereof. The ferrule 57 is enclosed in a longitudinally divided, circular cross-section, hood 66 projecting from the body 60 and providing resilient latch arms 68 enclosing the ferrule 57.

The support member 58 has a body 70 having a circular cross-section hood 72 receiving the hood 66 of the support member 56, the body 70 being formed with a circular cross-section bore 74 receiving the connector 10 and communicating with a second and smaller circular cross-section bore 76 opening into a forward face 78 within the hood 72, of the body 70. The needle 8′ of the connector 10, which extends through the bore 76, is snuggly and slidably received in the bore 64 of the ferrule 57, with its optical face 54 in light transmitting, face to face, relationship with the optical face 78 of the portion 8˝ of the needle 2′.

Spaced, opposed, longitudinal grooves 80 and 82, the groove 80 being longer than the groove 82, are formed in the wall of the bore 74. The groove 80 has force fitted thereinto an electrical terminal 86 having a cantilever spring portion 88 with a bowed contact portion 90 engaged in the groove 48 of the connector 10. A further electrical terminal 92, force fitted into the groove 82 has a cantilever contact portion 94 having a bowed contact portion 96 engaged in the groove 50 of the connector 10. The terminals 86 and 92 have contact tails 98 and 100, respectively, which are soldered to printed supply conductors PC₁ and PC₂, respectively, on a printed circuit board PCB, for the application of electrical potential to the active optical device 36 via the metal parts 14 and 30 of the cartridge 12.

With the parts of the assembly shown in Figure 1 in a disassembled condition, the latch arms 68 are opened, the formule 57 is inserted therebetween and the hoods 66 and 72 are mated, the connector 10 and the needle 2′ being then plugged into the bores 62 and 74, respectively, so that the needle 8′ and the portion 8˝ of the needle 2′ slide snuggly into the bore 64 of the ferrule 57 to position the optical faces 54 and 78 in proximate, face to face relationship. The connector 10 fits into the bore 74 with a snap action, as the bowed contact portions 90 and 96 of the terminals 86 and 92 engage in the respective grooves 48 and 50 of the cartridge 12.

The optical face (not shown) of the needle 2′, opposite to its optical face 78, is connected to an optical circuit by means of an optical connector which may comprise, for example, a ferrule similar to the ferrule 57, for receiving an optical needle through either end.

## Claims

1. A fibre optic connector (10) comprising an optical needle (8′) in the form of a length of optical fibre having a rigid concentric coating of constant thickness, and which is formed at each of its opposite end faces with an optical surface (52,54); a packaged active optical device (36) comprising an outer shell and electrodes (42,44) for the application of electrical potentials thereto; and a cartridge (12) comprising a first part (14) having a cavity (20) in which the optical device (36) is mounted and a bore (18) formed in a wall of said first part (14) communicating with the cavity (20) and in which an end portion of the optical needle (8′) is fixed, the optical device (36) and the optical needle (8′) being supported so as to allow the transmission of light therebetween; characterised in that said optical needle (8′) has a free end portion projecting from the cartridge; a first electrode of the packaged active optical device is provided by the shell; said first part (14) of said cartridge (12) includes a first metal part, that forms a first external electrode and engages said first electrode of the packaged device and in that said cartridge (12) further comprises a second metal part (30) and an insulator (24) between said first and second metal parts (14,30), the second electrode (44) of the active optical device (36) being electrically connected to the second metal part (30) whicn thereby forms a second external electrode.

2. A connector according to claim 1, characterised in that the coating of the optical needle (8′) is metallic and is soldered or welded to said first external electrode (14).

3. A connector according to claim 1 or 2, characterised in that the second electrode (44) of the active optical device (36) extends through a bore (26) in the insulator (24).

4. A connector according to any preceding claim, characterised in that the outer shell is press fitted into the cavity (20).

5. A connector according to any one of the preceding claims, characterised in that the first electrode of the packaged optical device (36) is a metal can (42).

6. A fibre optic connector assembly comprising a fibre optic connector (10) according to claim 1, characterised by a second optical needle (8˝) also in the form of a length of optical fibre (4) having a rigid coating and which is formed at each of its opposite end faces with an optical surface (78); a rigid alignment member (57) slidably and snugly receiving an end portion of each optical needle (8′,8˝); and means (56,58) for retaining said end portions in the alignment member (57) with their optical surfaces (54 and 78) in proximate face to face relationship, said retaining means (58) being provided with electrical terminals (86 and 92) electrically connected to corresponding external electrodes (14,30) of the cartridge (12,36) for the application of electrical potential thereto; the fibre optic connector (10) being received in a bore (74) in the retaining means (56,58), the coating of the first optical needle (8′) being soldered or welded to a respective external electrode (14).

7. An assembly according to claim 6, characterised in that said retaining means comprise a first support member (56) and a second support member (58), the first support member (56) having a first hood (68) containing the alignment member (57) and being received in a second hood (72) projecting from the second support member (58).

8. An assembly according to claim 7, characterised in that the first hood (68) is divided longitudinally of the alignment member (57) to provide latch arms (68) for releasably containing the alignment member (57).

9. An assembly according to claim 6 or 7, characterised in that the second optical needle (8˝) is supported by the first support member (56) with said end portion of the second optical needle projecting therefrom into the alignment member (57).

## Patentansprüche

1. Faseroptischer Koppler (10) mit einer optischen Nadel (8′) in der Form einer Länge einer optischen Faser, die eine starre konzentrische Beschichtung konstanter Dicke hat und die an jeder ihrer entgegengesetzten Endflächen mit einer optischen Oberfläche (52, 54) ausgebildet ist, wobei eine eingehüllte aktive optische Vorrichtung (36) eine äußere Hülse und Elektroden (42, 44) für das Aufbringen elektrischer Potentiale darauf aufweist, und wobei eine Kartusche (12) einen ersten Teil (14) aufweist, der einen Hohlraum (20) hat, in dem die optische Vorrichtung (36) angebracht ist, und wobei eine in einer Wand des ersten Teils (14) ausgebildete Bohrung (18) mit dem Hohlraum (20) in Verbindung steht und in der ein Endabschnitt der optischen Nadel (8′) fixiert ist, wobei die optische Vorrichtung (36) und die optische Nadel (8′) so abgestützt sind, daß sie dazwischen die Übertragung von Licht gestatten, dadurch **gekennzeichnet**, daß die optische Nadel (8′) einen freien Endabschnitt hat, der von der Kartusche vorragt, daß eine erste Elektrode der eingehüllten aktiven optischen Vorrichtung durch die Hülse gebildet ist, daß der erste Teil (14) der Kartusche (12) einen ersten Metallteil aufweist, der eine erste äußere Elektrode bildet und die erste Elektrode der eingehüllten Vorrichtung berührt, und daß die Kartusche (12) ferner einen zweiten Metallteil (30) und einen Isolator (24) zwischen dem ersten und dem zweiten Metallteil (14, 30) aufweist, wobei die zweite Elektrode (44) der aktiven optischen Vorrichtung (36) elektrisch mit dem zweiten Metallteil (30) verbunden ist, der dadurch eine zweite äußere Elektrode bildet.

2. Koppler nach Anspruch 1, dadurch **gekennzeichnet,** daß die Beschichtung der optischen Nadel (8′) metallisch ist und mit der ersten äußeren Elektrode (14) verlötet oder verschweißt ist.

3. Koppler nach Anspruch 1 oder 2, dadurch **gekennzeichnet,** daß die zweite Elektrode (44) der aktiven optischen Vorrichtung (36) sich durch eine Bohrung (26) in dem Isolator (24) hindurch erstreckt.

4. Koppler nach einem vorhergehenden Anspruch, dadurch **gekennzeichnet**, daß die äußere Hülse unter Preßsitz in dem Hohlraum (20) aufgenommen ist.

5. Koppler nach einem der vorhergehenden Ansprüche, dadurch **gekennzeichnet,** daß die erste Elektrode der eingehüllten optischen Vorrichtung (36) eine Metallbüchse (42) ist.

6. Faseroptische Koppleranordnung mit einem faseroptischen Koppler (10) gemäß Anspruch 1, **gekennzeichnet** durch eine zweite optische Nadel (8˝) auch in der Form einer Länge einer optischen Faser (4), die eine starre Beschichtung hat und die an jeder ihrer entgegengesetzten Endflächen mit einer optischen Oberfläche (78) ausgebildet ist, wobei ein starres Ausrichtglied (57) gleitfähig und dicht einen Endabschnitt jeder optischen Nadel (8′, 8˝) aufnimmt, und durch Mittel (56, 58) zum Halten der Endabschnitte in dem Ausrichtglied (57) mit ihren optischen Oberflächen (54 und 78) in benachbarter Beziehung Fläche an Fläche, wobei die Haltemittel (58) mit elektrischen Anschlüssen (86 und 92) versehen sind, die elektrisch mit entsprechenden äußeren Elektroden (14, 30) der Kartusche (12, 36) für das Anlegen eines elektrischen Potentials daran verbunden sind, wobei der faseroptische Koppler (10) in einer Bohrung (74) in den Haltemitteln (56, 58) aufgenommen ist und wobei die Beschichtung der ersten optischen Nadel (8′) mit einer entsprechenden äußeren Elektrode (14) verlötet oder verschweißt ist.

7. Anordnung nach Anspruch 6, dadurch **gekennzeichnet,** daß die Haltemittel ein erstes Stützglied (56) und ein zweites Stützglied (58) aufweisen, wobei das erste Stützglied (56) eine erste Abdeckung (68) hat, die das Ausrichtglied (57) enthält und in einer zweiten Abdeckung (72) aufgenommen ist, die von dem zweiten Stützglied (58) vorragt.

8. Anordnung nach Anspruch 7, dadurch **gekennzeichnet**, daß die erste Abdeckung (68) in Längsrichtung des Ausrichtglieds (57) geteilt ist, um Verriegelungsarme (68) zu bilden, um das Ausrichtglied (57) lösbar aufzunehmen.

9. Anordnung nach Anspruch 6 oder 7, dadurch **gekennzeichnet**, daß die zweite optische Nadel (8˝) durch das erste Stützglied (56) abgestützt ist, wobei der Endabschnitt der zweiten optischen Nadel davon in das Ausrichtglied (57) vorragt.

## Revendications

1. Connecteur (10) pour fibre optique comportant une aiguille optique (8′) sous la forme d'une longueur de fibre optique ayant un revêtement concentrique et rigide d'épaisseur constante, et à chacune des faces extrêmes opposées de laquelle est formée une surface optique (52, 54) ; un dispositif optique actif (36) sous boîtier comportant une coque extérieure et des électrodes (42, 44) pour l'application de potentiels électriques à ce dispositif ; et une cartouche (12) comportant une première partie (14) ayant une cavité (20) dans laquelle le dispositif optique (36) est monté et un alésage (18) formé dans une paroi de ladite première partie (14) communiquant avec la cavité (20) et dans lequel une partie extrême de l'aiguille optique (8′) est fixée, le dispositif optique (36) et l'aiguille optique (8′) étant supportés de façon à permettre la transmission de la lumière entre eux ; caractérisé en ce que ladite aiguille optique (8′) comporte une partie extrême libre faisant saillie de la cartouche ; une première électrode du dispositif optique actif sous boîtier est constituée par la coque ; ladite première partie (14) de ladite cartouche (12) comprend une première partie métallique qui forme une première électrode extérieure et engage ladite première électrode du dispositif sous boîtier, et en ce que ladite cartouche (12) comporte en outre une seconde partie métallique (30) et un isolateur (24) entre lesdites première et seconde parties métalliques (14, 30), la seconde électrode (44) du dispositif optique actif (36) étant connectée électriquement à la seconde partie métallique (30) qui forme ainsi une seconde électrode extérieure.

2. Connecteur selon la revendication 1, caractérisé en ce que le revêtement de l'aiguille optique (8′) est métallique et est brasé ou soudé à ladite première électrode extérieure (14).

3. Connecteur selon la revendication 1 ou 2, caractérisé en ce que la seconde électrode (44) du dispositif optique actif (36) passe dans un alésage (26) de l'isolateur (24).

4. Connecteur selon l'une quelconque des revendications précédentes, caractérisé en ce que la coque extérieure est ajustée à force dans la cavité (20).

5. Connecteur selon l'une quelconque des revendications précédentes, caractérisé en ce que la première électrode du dispositif optique (36) sous boîtier est un boîtier métallique (42).

6. Assemblage d'un connecteur pour fibre optique comportant un connecteur (10) pour fibre optique selon la revendication 1, caractérisé par une seconde aiguille optique (8˝) également sous la forme d'une longueur de fibre optique (4) ayant un revêtement rigide et à chacune des faces extrêmes opposées duquel est formée une surface optique (78) ; un élément rigide (57) d'alignement recevant de façon coulissante et étroite une partie extrême de chaque aiguille optique (8′, 8˝) ; et des moyens (56, 58) destinés à retenir lesdites parties extrêmes dans l'élément d'alignement (57) de façon que leurs surfaces optiques (54 et 78) soient dans une disposition face à face et rapprochée, lesdits moyens (58) de retenue étant pourvus de bornes électriques (86 et 92) connectées électriquement à des électrodes extérieures correspondantes (14, 30) de la cartouche (12, 36) pour lui appliquer un potentiel électrique ; le connecteur (10) pour fiche optique étant reçu dans un alésage (74) des moyens de retenue (56, 58), le revêtement de la première aiguille (8′) étant brasé ou soudé à une électrode extérieure respective (14).

7. Assemblage selon la revendication 6, caractérisé en ce que lesdits moyens de retenue comprennent un premier élément de support (56) et un second élément de support (58), le premier élément de support (56) ayant une première coiffe (58) contenant l'élément d'alignement (57) et reçue dans une seconde coiffe (72) faisant saillie du second élément de support (58).

8. Assemblage selon la revendication 7, caractérisé en ce que la première coiffe (68) est divisée longitudinalement à l'élément (57) d'alignement pour constituer des bras (68) de verrouillage destinés à contenir de façon libérable l'élément d'alignement (57).

9. Assemblage selon la revendication 6 ou 7, caractérisé en ce que la seconde aiguille optique (8˝) est supportée par le premier élément de support (56) de manière que ladite partie extrême de la seconde aiguille optique en fasse saillie jusque dans l'élément d'alignement (57).
